(19) **Europäisches Patentamt**
**European Patent Office**
**Office européen des brevets**

(11) **EP 2 343 490 B1**

(12) **EUROPEAN PATENT SPECIFICATION**

(45) Date of publication and mention
of the grant of the patent:
**26.12.2018 Bulletin 2018/52**

(51) Int Cl.:
***F25B 30/02*** *(2006.01)*      ***F25B 1/053*** *(2006.01)*
*F25D 17/02* *(2006.01)*

(21) Application number: **11150144.1**

(22) Date of filing: **05.01.2011**

(54) **Heat pump and method for calculating heating-medium flow rate of heat pump**

Wärmepumpe und Verfahren zur Berechnung der Flussrate des Heizmediums in der Wärmepumpe

Pompe à chaleur et procédé pour calculer le débit du milieu de chauffage de la pompe à chaleur

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.01.2010 JP 2010002624**

(43) Date of publication of application:
**13.07.2011 Bulletin 2011/28**

(73) Proprietor: **MITSUBISHI HEAVY INDUSTRIES
THERMAL SYSTEMS, LTD.
Tokyo 108-8215 (JP)**

(72) Inventors:
• **Ueda, Kenji**
**TOKYO 108-8215 (JP)**
• **Matsuo, Minoru**
**TOKYO 108-8215 (JP)**

(74) Representative: **Intès, Didier Gérard André et al
Cabinet Beau de Loménie
158 rue de l'Université
75340 Paris Cedex 07 (FR)**

(56) References cited:
**EP-A1- 1 475 684      JP-A- 2009 204 262
US-A1- 2004 000 155    US-A1- 2006 236 781
US-A1- 2008 087 027**

**Description**

{Technical Field}

The present invention relates to a heat pump and a method for calculating the heating-medium flow rate of a heat pump.

{Background Art}

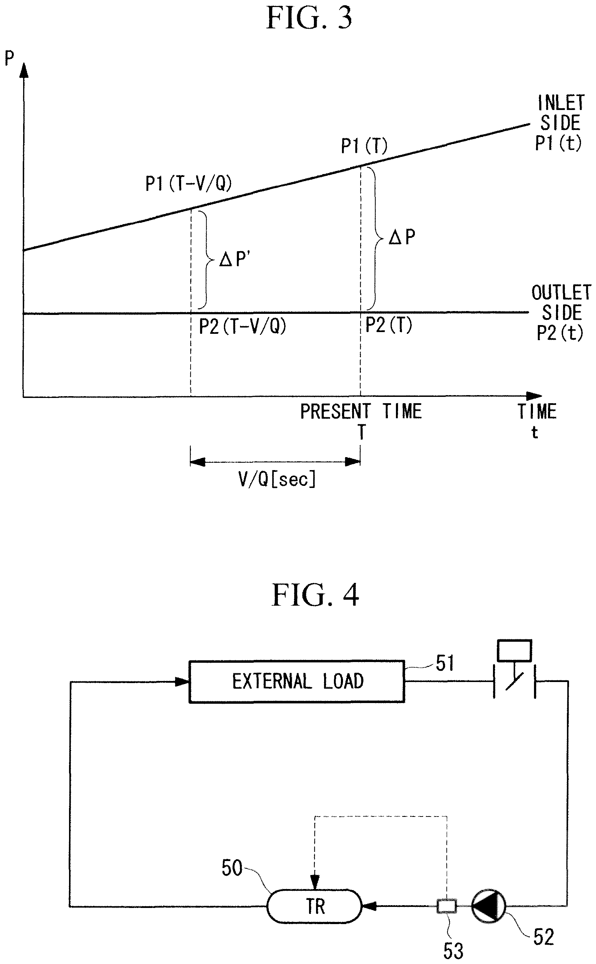

For example, a turbo-refrigerator is used to achieve zoned air conditioning or air conditioning of semiconductor manufacturing facilities. Fig. 4 illustrates a block diagram of a heat source system that uses a conventional turbo-refrigerator. As shown in Fig. 4, a turbo-refrigerator 50 cools cold water (heating medium) supplied from an external load 51, such as an air conditioner and a fan coil, to a predetermined temperature and supplies the cooled cold water to the external load 51. A cold water pump 52 that pumps the cold water is disposed upstream of the turbo-refrigerator 50, as viewed from cold water flow. Furthermore, a cold water flowmeter 53 that measures the flow rate of cold water flowing out of the cold water pump 52 is provided downstream of the cold water pump 52. The output of the cold water flowmeter 53 is sent to a control unit (not shown) that controls the turbo-refrigerator 50, and this cold water flow rate is used as one of the control parameters to control the turbo-refrigerator 50.

EP 1 475 684 discloses pressure-type flow rate control apparatus that can control the flow rate of a fluid with great precision using an empirical formula. The empirical formula can provide values that closely fit with the actual flow rates of a compressible fluid under non-critical conditions. The pressure-type flow rate control apparatus can control the flow rate of fluid passing through an orifice to a target flow rate with accuracy and at a high speed.

US 2006/236781 discloses a differential pressure type flowmeter having an orifice, a detector to detect a fluid pressure P1 on the upstream side of an orifice, a detector to detect a fluid pressure P2 on the downstream side of an orifice, a detector to detect a fluid temperature T on the upstream side of an orifice, and a control computation circuit to compute a fluid's flow rate Q passing through an orifice by using the pressure P1, pressure P2 and temperature T detected with the aforementioned detectors. The fluid flow rate is computed with an equation based on the pressures P1 and P2. US 2004/000155 discloses a variable-primary-flow system including two variable speed pumps that pump water through a first chiller and a second chiller. A control energizes the second chiller in response to a cooling demand exceeding that what can be met by the first chiller operating alone, and deenergizes the second chiller upon the cooling demand decreasing to a level below the first chiller's maximum capacity. When both chillers are operating, the capacities of the chillers are modulated in unison to meet the cooling demand. Likewise, when both pumps are running, their speed is modulated in unison to provide a desired pressure. US 2008/087027 discloses a water-cooled air conditioner including an indoor unit, an outdoor unit, a cooling tower, and a boiler. The indoor unit cools or heats a space, and includes a first heat exchanger that performs heat exchange between air and refrigerant. The outdoor unit is installed separately from the indoor unit and includes a second heat exchanger that performs heat exchange between water and refrigerant. The cooling tower is connected to the outdoor unit, and cools water flowing to the second heat exchanger. The boiler is connected to the outdoor unit, and increases a temperature of the water flowing to the second heat exchanger. The second heat exchanger is formed with a plurality of thin plates separated from one another by predetermined gaps through which refrigerant and water flow. The second heat exchanger includes an anti-freezing device that prevents freezing of water within the second heat exchanger.

{Citation List}

{Patent Literature}

{PTL 1} Japanese Unexamined Patent Application, Publication No. 2009-204262

{Summary of Invention}

{Technical Problem}

For example, in the heat source system described above, an electromagnetic flowmeter is used as a cold water flowmeter that measures the flow rate of cold water output from the turbo-refrigerator. However, electromagnetic flowmeters are so expensive that it is sometimes difficult to adopt them.

Furthermore, a known method in the related art generally calculates the flow rate from a differential pressure using a differential pressure sensor, which is cheaper than the electromagnetic flowmeter. However, because the turbo-refrigerator tends to cause pressure fluctuations of a heating medium, such as cold water, application of a general differential pressure sensor to the turbo-refrigerator has a problem in that it is not possible to satisfy the required accuracy because of large variations in the measured value.

The present invention is made in consideration of such circumstances, and it is an object thereof to provide a heat pump and a method for calculating the heating-medium flow rate of a heat pump, which is capable of obtaining the heating-medium flow rate with sufficient accuracy even if an inexpensive differential pressure sensor is used.

{Solution to Problem}

To solve the above problem, the present invention adopts the following solutions.

A first aspect of the present invention is a heat pump according to claim 1.

With the above configuration, the differential pressure between the inlet-side pressure and the outlet-side pressure of the heating medium in the first heat exchanger is measured using the differential pressure sensor, and the flow rate of the heating medium in the first heat exchanger is calculated using this measurement data and the loss factor unique to the first heat exchanger. Accordingly, a heating-medium flow rate that sufficiently satisfies the required accuracy can be obtained with an inexpensive, simple configuration.

Since the flow rate is corrected using the correction term depending on the measurement delay time of the outlet-side pressure based on the amount of the heating medium held in the first heat exchanger, an error due to the amount of the heating medium held in the first heat exchanger can be eliminated, and thus, the heating-medium-flow-rate calculation accuracy can be improved.

In the heat pump described above, the control means may obtain the permissible quantity of heat exchanged in the first heat exchanger by substituting the current motive power consumption of the turbo-compressor and the quantity of heat exchanged in the second heat exchanger into a relational expression expressing the relationship among the motive power consumption of the turbo-compressor, the quantity of heat exchanged in the first heat exchanger, and the quantity of heat exchanged in the second heat exchanger and may determine the permissible range of the flow rate of the heating medium in the first heat exchanger from the permissible quantity of heat exchanged in the first heat exchanger, wherein if the flow rate of the heating medium determined by calculation exceeds the flow rate range of the heating medium, the control means may determine the flow rate of the heating medium on the basis of the flow rate range of the heating medium and may transmit the value to the facility-side equipment.

With such a configuration, the control means stores a relational expression that is satisfied among the motive power consumption of the turbo-compressor, the quantity of heat exchanged in the first heat exchanger, and the quantity of heat exchanged in the second heat exchanger, and determines the permissible range of the heating-medium flow rate of the first heat exchanger using this relational expression, and if the cold-water flow rate calculated on the basis of the measurement data from the differential pressure sensor exceeds the permissible range of the heating-medium flow rate, the control means determines the heating-medium flow rate of the first heat exchanger obtained from the relational expression and transmits this value to the facility-side equipment.

Accordingly, this allows the reliability of the measurement data from the differential pressure sensor to be evaluated using the above relational expression, thus allowing a fault in the differential pressure sensor to be detected. Furthermore, even if a fault in the differential pressure sensor is detected, because the heating-medium flow rate obtained from the relational expression is transmitted to the facility-side equipment, data transmission to facility-side equipment can continue.

A second aspect of the present invention is a method according to claim 3.

{Advantageous Effects of Invention}

The present invention provides an advantage in that it is capable of obtaining a heating-medium flow rate with sufficient accuracy even with an inexpensive, differential pressure sensor.

{Brief Description of Drawings}

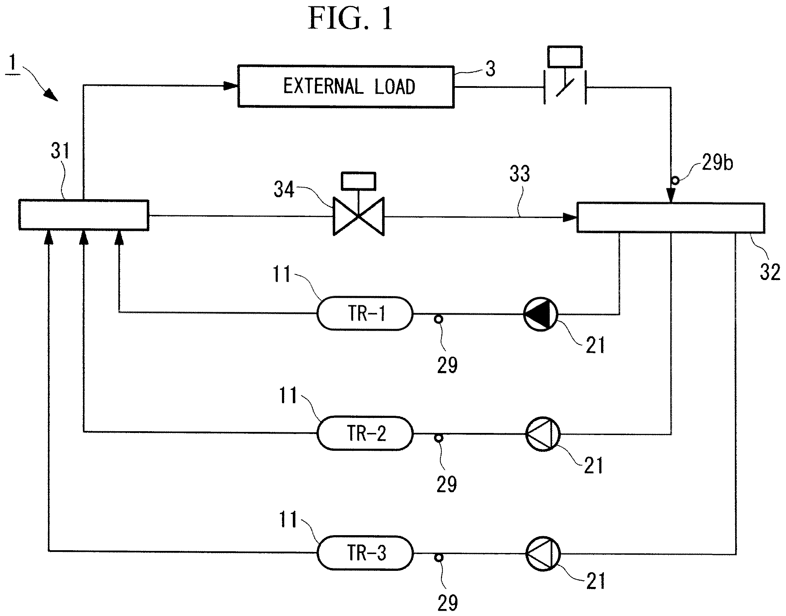

{Fig. 1} Fig. 1 is a diagram illustrating, in outline, the configuration of a heat source system according to a first embodiment of the present invention.

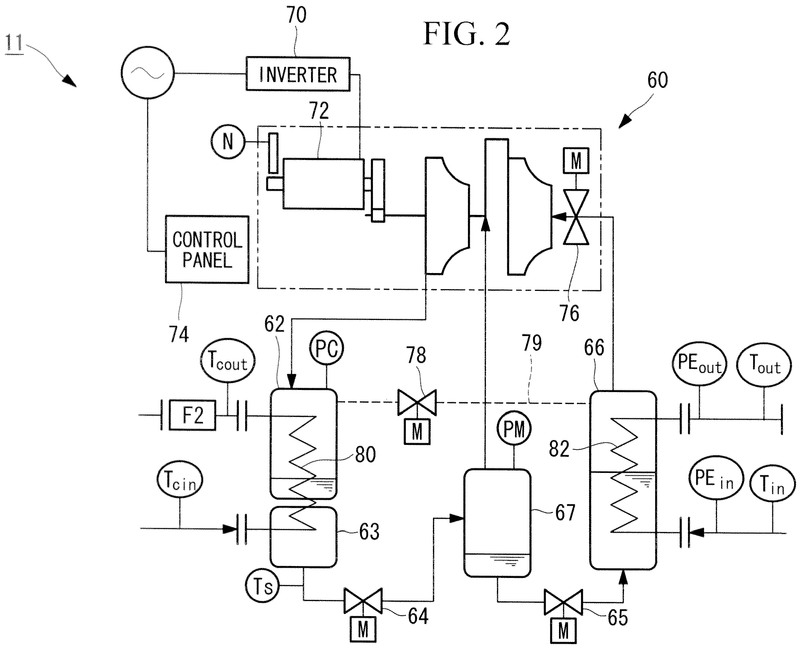

{Fig. 2} Fig. 2 is a diagram illustrating, in outline, the configuration of a turbo-refrigerator according to the first embodiment of the present invention.

{Fig. 3} Fig. 3 is a diagram for explaining a case in which the cold-water flow rate is corrected on the basis of the amount of cold water held in an evaporator.

{Fig. 4} Fig. 4 is a diagram illustrating, in outline, the configuration of a conventional heat source system.

{Description of Embodiments}

{First Embodiment}

A heat pump according to a first embodiment of the present invention will be described hereinbelow using the drawings. Although this embodiment is described using an example in which the heat pump is a turbo-refrigerator, it is not limited thereto. For example, instead of the turbo-refrigerator, it may be a chiller, etc.

Fig. 1 illustrates, in outline, the configuration of a heat source system 1 incorporating a turbo-refrigerator according to this embodiment. The heat source system 1 is installed in, for example, buildings and plant facilities. As shown in Fig. 1, the heat source system 1 is equipped with three turbo-refrigerators 11 that cool and heat cold water (heating medium) to be supplied to an external load 3, such as an air conditioner or a fan coil. These turbo-refrigerators 11 are disposed in parallel with the external load 3.

Cold water pumps 21 that pump cold water are disposed upstream of the individual turbo-refrigerators 11, as viewed from the cold water flow. These cold water pumps 21 distribute the cold water from a return header 32 to the individual turbo-refrigerators 11. The individual cold water pumps 21 are each driven by an inverter motor, and the rotational speeds are changed, thus allowing for variable flow rate control.

A supply header 31 is configured to collect cold water obtained in the individual turbo-refrigerators 11. The cold water collected in the supply header 31 is supplied to the external load 3. The cold water that is increased in temperature by being used for air conditioning or the like in the external load 3 is distributed to the return header 32. The cold water is separated in the return header 32 and is distributed to the individual turbo-refrigerators 11.

Cold water pipes upstream of the individual turbo-refrigerators 11 are provided with cold-water-inlet-temperature sensors 29 for measuring the temperatures of cold water flowing into the individual turbo-refrigerators 11. The outputs of the cold-water-inlet-temperature sensors 29 are individually sent to control panels 74 (see Fig. 2), described later, of the individual turbo-refrigerators 11. If a bypass valve 34 of a bypass pipe 33 is fully open, a temperature sensor 29b provided at a cold water pipe upstream of the return header 32 may be used instead of the cold-water-inlet-temperature sensors.

Fig. 2 illustrates the detailed configuration of the turbo-refrigerator 11.

The turbo-refrigerator 11 is configured to achieve a two-stage two-expansion subcooling cycle. This turbo-refrigerator 11 includes a turbo-compressor 60 that compresses a coolant, a condenser (second heat exchanger) 62 that condenses a high-temperature, high-pressure gas coolant compressed by the turbo-compressor 60, a subcooler 63 that applies supercooling to the liquid coolant condensed by the condenser 62, a high-pressure expansion valve 64 that expands the liquid coolant from the subcooler 63, an intermediate cooler 67 that is connected to the high-pressure expansion valve 64 and is connected to the intermediate stage of the turbo-compressor 60 and to the low-pressure expansion valve 65, and an evaporator (first heat exchanger) 66 that evaporates the liquid coolant expanded by the low-pressure expansion valve 65.

The turbo-compressor 60 is a centrifugal two-stage compressor and is driven by an electric motor 72 whose rotational speed is controlled by an inverter 70. The output of the inverter 70 is controlled by the control panel 74. The turbo-compressor 60 may be a constant-speed compressor having a constant rotational speed. A coolant inlet port of the turbo-compressor 60 is provided with an inlet guide vane (hereinafter referred to as "IGV") 76 that controls the flow rate of an intake coolant to allow for capacity control of the turbo-refrigerator 11.

The condenser 62 is provided with a condensed-coolant pressure sensor PC for measuring the condensed coolant pressure. The output of the sensor PC is transmitted to the control panel 74.

The subcooler 63 is provided downstream of the coolant flow of the condenser 62 so as to apply supercooling to the condensed coolant. A temperature sensor Ts that measures the coolant temperature after supercooling is provided just behind the subcooler 63 at the coolant flow downstream side.

A cooling heat-transfer pipe 80 passes through the condenser 62 and the subcooler 63 to cool them. The cooling-water flow rate is measured by a flowmeter F2, the cooling-water outlet temperature is measured by a temperature sensor Tcout, and the cooling-water inlet temperature is measured by a temperature sensor Tcin. The heat of the cooling water is exhausted to the outside by a cooling tower (not shown), and the cooling water is thereafter introduced to the condenser 62 and the subcooler 63 again.

The intermediate cooler 67 is provided with a pressure sensor PM for measuring an intermediate pressure.

The cold water inlet and outlet of the evaporator 66 are provided with differential pressure sensors PEin and PEout, respectively, for measuring the differential pressure between the inlet and outlet of the cold water. By absorbing heat in the evaporator 66, rated-temperature (for example, 7°C) cold water can be obtained. A cold-water heat transfer pipe 82 for cooling the cold water to be supplied to the external load 3 passes through the evaporator 66. The cold-water outlet temperature is measured by a temperature sensor Tout, and the cold-water inlet temperature is measured by a temperature sensor Tin.

A hot-gas bypass pipe 79 is provided between the vapor phase portion of the condenser 62 and the vapor phase portion of the evaporator 66. Furthermore, a hot-gas bypass valve 78 for controlling the flow rate of a coolant flowing in the hot-gas bypass pipe 79 is provided. Adjusting the hot-gas bypass flow rate with the hot-gas bypass valve 78 allows for capacity control in a very small load region that cannot be sufficiently controlled by the IGV 76.

The turbo-refrigerator 11 shown in Fig. 2 is described when applied to a case in which the condenser 62 and the subcooler 63 are provided, in which heat is exchanged between the coolant and the cooling water whose heat is exhausted to the outside in the cooling tower to thereby heat the cooling water. Alternatively, for example, an air heat exchanger may be provided instead of the condenser 62 and the subcooler 63, and heat may be exchanged between the outside air and the coolant by the air heat exchanger.

The turbo-refrigerator 11 applied to this embodiment is not limited to the turbo-refrigerator having only the cooling function described above; for example, it may have only a heating function or both a cooling function and a heating function. The medium whose heat is exchanged with the coolant may be either water or air.

In Fig. 2, measurement data items obtained by the individual sensors are transmitted to the control panel 74, in which various controls based on these measurement data are performed.

Measurement of the flow rate of cold water in the evaporator 66, which is a feature of the present invention, will be specifically described.

The control panel 74 stores a loss factor $\varsigma$ of the evaporator 66 in advance. The control panel 74 calculates a flow rate Q using the differential pressure $\Delta P$ and the loss factor $\varsigma$ measured by the differential pressure sensors PEin and PEout in the following formula (1), where A is a cross-sectional area, $\varsigma$ is a loss factor, $\rho$ is the density of the heating medium, and v is a flow velocity.

$$Q = \xi\sqrt{\Delta P} = \xi\sqrt{P_{in} - P_{out}} \qquad (1)$$

$$Q = Av$$

$$\Delta P = \zeta\,\frac{\rho v^2}{2g}$$

$$v = \sqrt{\frac{2g}{\rho\zeta}\,\Delta P}$$

$$\xi = A\sqrt{\frac{2g}{\rho\zeta}}$$

The control panel 74 controls the turbo-refrigerator 11 on the basis of the various parameters, such as the flow rate Q, and transmits the flow rate Q and the various parameters to external facility-side equipment via a communication medium. The facility-side equipment monitors, for example, the coefficient of performance (COP) etc. of the turbo-refrigerator 11 and uses the transmitted parameters for these monitored items.

With the turbo-refrigerator and the method for calculating the heating-medium flow rate of the turbo-refrigerator according to this embodiment, as described above, since the differential pressure at the cold water outlet and inlet of the evaporator 66 is measured using the differential pressure sensors, and the flow rate of the cold water in the evaporator 66 is calculated using this measurement data and the loss factors $\varsigma$ of the individual evaporators 66, a heating-medium flow rate that sufficiently satisfies required accuracy can be obtained with an inexpensive, simple configuration.

The heating-medium flow rate Q of the evaporator 66 has temperature dependency. Accordingly, the control panel 74 may calculate the flow rate Q using an operational expression that involves temperature dependency, instead of Formula (1).

Furthermore, the measurement data transmitted from the above-described differential pressure sensors includes disturbance due to, for example, opening/closing of the various valves provided on the coolant circulation path of the turbo-refrigerators 11. To eliminate such disturbance, the heating-medium flow rate Q may be calculated from the above Formula (1), for example, by processing sampling data measured by the differential pressure sensors using the following expression (2) or (3) and using the processed data.

$$x_{ave} = \frac{\Delta T \cdot (n-1) \cdot x_{ave \cdot n-1} + \Delta T \cdot x}{\Delta T \cdot n} \qquad (2)$$

$$x_{ave} = \frac{\Delta T \cdot x_{ave \cdot n-1} + \Delta T \cdot x}{T + \Delta T} \qquad (3)$$

Both expressions (2) and (3) above are operational expressions for calculating a moving average, where xave is a differential pressure ΔP during a predetermined period of time for which the moving average is taken, ΔT is a sampling period, n is the number of moving-average data items, and xave·n-1 is the moving average of the immediately preceding sampling data. By finding the heating-medium flow rate Q from Formula (1) using the moving-average differential pressure in this way, disturbance (noise) due to, for example, opening/closing of the valves provided in the refrigerating cycle of the turbo-refrigerator 11 can be eliminated, thus allowing a more accurate heating-medium flow rate Q to be obtained.

Furthermore, the evaporator 66 in the turbo-refrigerator 11 holds a large amount of water because of its large size. This causes a time difference according to the amount of held water between the pressure at the cold water inlet of the evaporator 66 and the pressure at the cold water outlet. Accordingly, to eliminate an error in differential pressure due to this time difference, a correction term based on the amount of water held in the evaporator 66 may be obtained, and the cold water flow rate may be corrected using this correction term.

For example, as the temporal change in pressure, it is assumed that a pressure P1(t) at the cold water inlet side of the evaporator 66 increases at a constant rate of change, and a pressure P2(t) at the cold water outlet side is constant, as shown in Fig. 3.

In this case, the flow rate Q [m3/sec] at that time can be expressed as the following expression (4), where T is the present time.

$$Q = \alpha \sqrt{\Delta P} \qquad (4)$$

$$\Delta P = P1(T) - P2(T)$$

On the other hand, if we let V [m3] be the amount of held water from the cold water inlet side to the cold water outlet side for which the differential pressure is measured, a flow rate Q' [m3/sec] at a time point before the present time T to the time when the cold water reaches the cold water outlet side from the cold water inlet side at the current flow rate is expressed as the following expression (5).

$$Q' = \alpha \sqrt{\Delta P'} \qquad (5)$$

$$\Delta P' = P1(T - \frac{V}{Q}) - P2(T - \frac{V}{Q})$$

$$= P1(T - \frac{V}{Q}) - P2(T)$$

Accordingly, by calculating the flow rate Q' using a differential pressure ΔP' that takes the above time delay into consideration, the error due to the amount of water held in the evaporator 66 can be eliminated, and thus, the cold-waterflow-rate calculation accuracy can be improved.

{Second Embodiment}

Next, a turbo-refrigerator and a method for calculating the heating-medium flow rate of the turbo-refrigerator according to a second embodiment of the present invention will be described.

In a turbo-refrigerators 11, the relational expression given by the following expression (6) holds for the motive power consumption W of a turbo-compressor 60, the quantity of heat exchanged in an evaporator 66, Qe, and the quantity of heat exchanged in a condenser 62, Qc.

$$Qe = Qc - W \qquad (6)$$

In general, the turbo-refrigerator is provided with a flowmeter F2 that measures the flow rate of cooling water that flows into the condenser 62 or flows out of the condenser 62, as shown in Fig. 2, and the flow rate of the cooling water is measured by the flowmeter F2, so that the quantity of heat exchanged in the condenser 62, Qc, can be calculated from the cooling-water flow rate using the following expression (7).

$$Qc = Cp \cdot \rho \cdot qc \cdot (Tcout - Tcin) \qquad (7)$$

where cp is specific heat [kJ/(kg•K)], $\rho$ is density [kg/m3], qc is volumetric flow rate [m3/sec], Tcout is cooling-water outlet temperature [K], and Tcin is cooling-water inlet temperature [K].

The motive power consumption W is also constantly measured at the control panel 74. Accordingly, the quantity of heat exchanged in the evaporator 66, Qe, can be found by using the quantity of heat exchanged in the condenser 62, Qc, obtained from the cooling-water flow rate and the motive power consumption W in the above expression (6), and the permissible range of the cold-water flow rate of the evaporator 66 can be determined from the quantity of heat exchanged, Qe. The permissible range of the cold-water flow rate is set, for example, within plus or minus 20% of the cold-water flow rate calculated from the quantity of heat exchanged, Qe.

If the cold-water flow rate of the evaporator 66 calculated using the calculation method described in the first embodiment exceeds the permissible range of the cold-water flow rate of the evaporator 66 determined from the above expression (6), it is determined that, for example, a differential pressure sensor provided in the evaporator 66 has a fault. If such a fault in the sensor is detected, the control panel 74 may transmit the cold-water flow rate obtained from the above expression (6) to facility-side equipment or may control the turbo-refrigerator 11 using this cold-water flow rate.

According to the second embodiment of the present invention, as described above, the relational expression that holds for the motive power consumption W of the turbo-compressor 60, the quantity of heat exchanged in the evaporator 66, Qe, and the quantity of heat exchanged in the condenser 62, Qc, is set at the control panel 74, and the permissible range of the cold-water flow rate of the evaporator 66 is determined using this relational expression; if the cold-water flow rate calculated on the basis of the measurement data from the differential pressure sensors provided at the cold water outlet and inlet of the evaporator 66 exceeds the permissible range of the cold-water flow rate, a sensor fault is detected, thus allowing for rapid detection of the sensor fault. Furthermore, even if a sensor fault is detected, the operation of the turbo-refrigerator 11 can be continued, and data transmission to facility-side equipment can be continued by using the cold-water flow rate of the evaporator 66 obtained from the above relational expression (6) .

In the turbo-refrigerator 11, in addition to the relational expression given by the above expression (6), for example, the relational expression of the cold-water flow rate of the evaporator 66 holds also from the head of the turbo-compressor 60 and the Q-H characteristics of an inverter frequency and a reference frequency. Since a head H corresponding to the differential pressure between a condensed coolant pressure Pc and an evaporated coolant pressure Pe for the Q-H characteristics of the compressor 60. Therefore, the volumetric flow rate of a coolant passing through the compressor 60 can be obtained using the Q-H characteristics. If we let Q1 be the volumetric flow rate, the weight flow rate Ge of the coolant flowing in the evaporator 66 can be obtained using the following expression, where $\rho$R is the density of coolant gas, and $\beta$ is the ratio of the evaporator flow rate to the compressor flow rate.

$$Ge = \beta \cdot \rho R \cdot Q1$$

The motive power consumption W of the compressor 60 can be given by the following expression, where $\Delta$h is a required compressor head, and $\eta$c is a compressor efficiency.

$$W = Ge \cdot \Delta h \cdot \eta c$$

Accordingly, the permissible range of the cold-water flow rate of the evaporator 66 may be determined on the basis of the Q-H characteristics and the like, instead of the above expression (6), and a fault in the differential pressure sensors etc. may be detected.

{Reference Signs List}

| | |
|---|---|
| 11 | turbo-refrigerator |
| 60 | turbo-compressor |
| 62 | condenser |
| 66 | evaporator |
| 70 | inverter |
| F2 | flowmeter |
| PEin, PEout | differential pressure sensor |
| Tout, Tin | temperature sensor |

**Claims**

1. A heat pump including a first heat exchanger (66) that cools or heats a heating medium flowing from an external load (3), a second heat exchanger (62) that exchanges heat with outside air or cooling water, a coolant circulation path through which a coolant is circulated between the first heat exchanger and the second heat exchanger, and a turbo-compressor (60) provided in the coolant circulation path, the heat pump being **characterised by**:

   a differential-pressure measuring means (PEin, PEout) for measuring the differential pressure between the inlet-side pressure and the outlet-side pressure of the heating medium in the first heat exchanger (66); and
   a control means (74) storing a loss factor ($\zeta$) of the first heat exchanger (66), for calculating the flow rate (Q) of the heating medium in the first heat exchanger on the basis of the loss factor and the differential pressure output ($\Delta P$) from the differential-pressure measuring means,
   wherein the control means (74) is configured to perform control using the flow rate (Q) of the heating medium and transmits the flow rate of the heating medium to facility-side equipment
   and wherein the control means (74) is configured to obtain a correction term for the differential pressure output ($\Delta P$) by using the inlet-side pressure of the heating medium in the first heat exchanger (66) measured at a time point before the present time (T) according to a time delay based on the amount (V) of the heating medium held in the first heat exchanger (66) and on the flow rate at the present time (T), and to correct the flow rate (Q) of the heating medium using the correction term.

2. The heat pump according to Claim 1, **characterized in that** the control means (74) obtains the permissible quantity of heat exchanged in the first heat exchanger (66) by substituting the current motive power consumption (W) of the turbo-compressor (60) and the quantity (Qc) of heat exchanged in the second heat exchanger (62) into a relational expression expressing the relationship among the motive power consumption (W) of the turbo-compressor, the quantity (Qe) of heat exchanged in the first heat exchanger, and the quantity (Qc) of heat exchanged in the second heat exchanger and determines the permissible range of the flow rate of the heating medium in the first heat exchanger from the permissible quantity of heat exchanged in the first heat exchanger (66), wherein if the flow rate of the heating medium determined by calculation exceeds the flow rate range of the heating medium, the control means (74) determines the flow rate of the heating medium on the basis of the flow rate range of the heating medium and transmits the value to the facility-side equipment.

3. A method for calculating the heating-medium flow rate of a heat pump including a first heat exchanger (66) that cools or heats a heating medium flowing from an external load (3), a second heat exchanger (62) that exchanges heat with outside air or cooling water, a coolant circulation path through which a coolant is circulated between the first heat exchanger and the second heat exchanger, and a turbo-compressor (60) provided in the coolant circulation path, the method being **characterised by**:

a differential-pressure measuring step of measuring the differential pressure between an inlet-side pressure and an outlet-side pressure at an inlet and an outlet of the heating medium of the first heat exchanger (66), and
a control step of calculating the flow rate of the heating medium in the first heat exchanger (66) on the basis of the loss factor ($\zeta$) of the first heat exchanger (66) and the differential pressure ($\Delta P$) measured in the differential-pressure measuring step, and
transmitting the flow rate of the heating medium to facility-side equipment, and
obtaining a correction term for the differential pressure output ($\Delta P$) by using the inlet-side pressure of the heating medium in the first heat exchanger (66) measured at a time point before the present time (T) according to a time delay based on the amount of the heating medium held in the first heat exchanger (66) and on the flow rate (Q) at the present time (T), and
correcting the flow rate (Q) of the heating medium using the correction term.

**Patentansprüche**

1. Wärmepumpe, aufweisend einen ersten Wärmetauscher (66), der ein von einer externen Last (3) strömendes Heizmedium kühlt oder erwärmt, einen zweiten Wärmetauscher (62), der Wärme mit Außenluft oder Kühlwasser austauscht, einen Kühlmittelumlaufpfad, in dem ein Kühlmittel zwischen dem ersten Wärmetauscher und dem zweiten Wärmetauscher umströmt, und einen Turbokompressor (60), der im Kühlmittelumlaufpfad bereitgestellt ist, wobei die Wärmepumpe **dadurch gekennzeichnet ist, dass** sie Folgendes umfasst:

   ein Differenzdruck-Messmittel (PEin, PEout) zum Messen des Differenzdrucks zwischen dem einlassseitigen Druck und dem auslassseitigen Druck des Heizmediums im ersten Wärmetauscher (66); und
   ein Steuermittel (74), das einen Verlustfaktor ($\zeta$) des ersten Wärmetauschers (66) speichert, um die Strömungsrate (Q) des Heizmediums im ersten Wärmetauscher auf Basis des Verlustfaktors und des Differenzdruckausgangs ($\Delta P$) vom Differenzdruckmessmittel zu berechnen,
   wobei das Steuermittel (74) konfiguriert ist für Durchführen einer Steuerung unter Verwendung der Strömungsrate (Q) des Heizmediums und Übertragen der Strömungsrate des Heizmediums an eine einrichtungsseitige Ausrüstung, und
   wobei das Steuermittel (74) konfiguriert ist für Erlangen eines Korrekturterms für den Differenzdruckausgang ($\Delta P$) durch Verwenden des einlassseitigen Drucks des Heizmediums im ersten Wärmetauscher (66), gemessen zu einem Zeitpunkt vor der gegenwärtigen Zeit (T) gemäß einem Zeitverzug auf Basis der Menge (V) des im ersten Wärmetauscher (66) gehaltenen Heizmediums und der Strömungsrate (Q) zur gegenwärtigen Zeit (T), und für Korrigieren der Strömungsrate (Q) des Heizmediums unter Verwendung des Korrekturterms.

2. Wärmepumpe nach Anspruch 1, **dadurch gekennzeichnet, dass** das Steuermittel (74) die zulässige Menge von im ersten Wärmetauscher (66) ausgetauschter Wärme durch Ersetzen des gegenwärtigen Antriebsleistungsverbrauchs (W) des Turbokompressors (60) und der Menge (Qc) der im zweiten Wärmetauscher (62) ausgetauschten Wärme durch einen relationalen Ausdruck, der die Beziehung zwischen dem Antriebsleistungsverbrauch (W) des Turbokompressors, der Menge (Qe) im ersten Wärmetauscher (66) ausgetauschter Wärme, und der Menge (Qc) der im zweiten Wärmetauscher ausgetauschten Wärme ausdrückt, erlangt und den zulässigen Bereich der Strömungsrate des Heizmediums im ersten Wärmetauscher anhand der zulässigen Menge von im ersten Wärmetauscher (66) ausgetauschter Wärme bestimmt, wobei, wenn die durch Berechnung bestimmte Strömungsrate des Heizmediums den Strömungsratenbereich des Heizmediums überschreitet, das Steuermittel (74) die Strömungsrate des Heizmediums auf Basis des Strömungsratenbereichs des Heizmediums bestimmt und den Wert an die einrichtungsseitige Ausrüstung überträgt.

3. Verfahren zum Berechnen der Heizmediums-Strömungsrate einer Wärmepumpe aufweisend einen ersten Wärmetauscher (66), der ein von einer externen Last (3) strömendes Heizmedium kühlt oder erwärmt, einen zweiten Wärmetauscher (62), der Wärme mit Außenluft oder Kühlwasser austauscht, einen Kühlmittelumlaufpfad, in dem ein Kühlmittel zwischen dem ersten Wärmetauscher und dem zweiten Wärmetauscher umströmt, und einen Turbokompressor (60), der im Kühlmittelumlaufpfad bereitgestellt ist, wobei das Verfahren **gekennzeichnet ist durch**:

   einen Differenzdruckmess-Schritt zum Messen des Differenzdrucks zwischen einem einlassseitigen Druck und einem auslassseitigen Druck an einem Einlass und einem Auslass des Heizmediums des ersten Wärmetauschers (66), und
   einen Steuerschritt zum Berechnen der Strömungsrate des Heizmediums im ersten Wärmetauscher (66) auf Basis des Verlustfaktors ($\zeta$) des ersten Wärmetauschers (66) und des Differenzdrucks ($\Delta P$), der im Differenz-

druckmess-Schritt gemessen worden ist, und

Übertragen der Strömungsrate des Heizmediums an die einrichtungsseitige Ausrüstung, und

Erlangen eines Korrekturterms für den Differenzdruckausgang (∆P) **durch** Verwenden des einlassseitigen Drucks des Heizmediums im ersten Wärmetauscher (66), gemessen zu einem Zeitpunkt vor der gegenwärtigen Zeit (T) gemäß einem Zeitverzug auf Basis der Menge des im ersten Wärmetauscher (66) gehaltenen Heizmediums und der Strömungsrate (Q) zur gegenwärtigen Zeit (T), und für Korrigieren der Strömungsrate (Q) des Heizmediums unter Verwendung des Korrekturterms.

## Revendications

1. Pompe à chaleur comprenant un premier échangeur de chaleur (66) qui refroidit ou chauffe un milieu chauffant s'écoulant à partir d'une charge externe (3), un second échangeur de chaleur (62) qui échange la chaleur avec l'air extérieur ou l'eau de refroidissement, une trajectoire de circulation de réfrigérant à travers laquelle un réfrigérant circule entre le premier échangeur de chaleur et le second échangeur de chaleur et un turbocompresseur (60) prévu dans la trajectoire de circulation de réfrigérant, la pompe à chaleur étant **caractérisée par** :

   un moyen de mesure de pression différentielle (PEin, PEout) pour mesurer la pression différentielle entre la pression du côté de l'entrée et la pression du côté de la sortie du milieu chauffant dans le premier échangeur de chaleur (66) ; et
   un moyen de commande (74) stockant un facteur de perte (ζ) du premier échangeur de chaleur (66) pour calculer le débit (Q) du milieu chauffant dans le premier échangeur de chaleur sur la base du facteur de perte et du résultat de pression différentielle (∆P) du moyen de mesure de pression différentielle,
   dans laquelle le moyen de commande (74) est configuré pour réaliser la commande en utilisant le débit (Q) du milieu chauffant et transmet le débit du milieu chauffant à l'équipement du côté de l'installation,
   et dans laquelle le moyen de commande (74) est configuré pour obtenir un terme de correction pour le résultat de pression différentielle (∆P) en utilisant la pression du côté de l'entrée du milieu chauffant dans le premier échangeur de chaleur (66) mesurée à un moment avant le moment présent (T) selon un délai basé sur la quantité (V) du milieu chauffant maintenu dans le premier échangeur de chaleur (66) et du débit (Q) au moment présent (T) et pour corriger le débit (Q) du milieu chauffant en utilisant le terme de correction.

2. Pompe à chaleur selon la revendication 1, **caractérisée en ce que** le moyen de commande (74) obtient la quantité admissible de chaleur échangée dans le premier échangeur de chaleur (66) en substituant la consommation de puissance motrice courante (W) du turbocompresseur (60) et la quantité (Qc) de chaleur échangée dans le second échangeur de chaleur (62) dans une expression relationnelle exprimant la relation parmi la consommation de puissance motrice (W) du turbocompresseur, la quantité (Qe) de chaleur échangée dans le premier échangeur de chaleur et la quantité (Qc) de chaleur échangée dans le second échangeur de chaleur et détermine la plage admissible de débit du milieu chauffant dans le premier échangeur de chaleur à partir de la quantité admissible de chaleur échangée dans le premier échangeur de chaleur (66), dans laquelle si le débit du milieu chauffant déterminé par calcul dépasse la plage de débit du milieu chauffant, le moyen de commande (74) détermine le débit du milieu chauffant sur la base de la plage de débit du milieu chauffant et transmet la valeur à l'équipement du côté de l'installation.

3. Procédé pour calculer le débit de milieu chauffant d'une pompe à chaleur comprenant un premier échangeur de chaleur (66) qui refroidit ou chauffe un milieu chauffant s'écoulant à partir d'une charge externe (3), un second échangeur de chaleur (62) qui échange la chaleur avec l'air extérieur ou l'eau de refroidissement, une trajectoire de circulation de réfrigérant à travers laquelle un réfrigérant circule entre le premier échangeur de chaleur et le second échangeur de chaleur, et un turbocompresseur (60) prévu dans la trajectoire de circulation de réfrigérant, le procédé étant **caractérisé par** :

   une étape de mesure de pression différentielle pour mesurer la pression différentielle entre une pression du côté de l'entrée et une pression du côté de la sortie au niveau d'une entrée et d'une sortie du milieu chauffant du premier échangeur de chaleur (66), et
   une étape de commande pour calculer le débit du milieu chauffant dans le premier échangeur de chaleur (66) sur la base du facteur de perte (ζ) du premier échangeur de chaleur (66) et de la pression différentielle (∆P) mesurée à l'étape de mesure de pression différentielle, et
   transmettre le débit du milieu chauffant à l'équipement du côté de l'installation, et
   obtenir un terme de correction pour le résultat de pression différentielle (L1P) en utilisant la pression du côté de l'entrée du milieu chauffant dans le premier échangeur de chaleur (66) mesurée à un moment avant le moment présent (T) selon un délai basé sur la quantité du milieu chauffant maintenu dans le premier échangeur de chaleur (66) et du débit (Q) au moment présent (T), et

corriger le débit (Q) du milieu chauffant en utilisant le terme de correction.

# FIG. 1

EXTERNAL LOAD  3

1

31

29b

34  33

32

11  TR-1  29  21

11  TR-2  29  21

11  TR-3  29  21

EP 2 343 490 B1

# FIG. 2

EP 2 343 490 B1

# FIG. 3

# FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1475684 A
- US 2006236781 A
- US 2004000155 A
- US 2008087027 A
- JP 2009204262 A